# FASCICULE DE BREVET EUROPEEN

(11) **EP 0 568 433 B1**
(45) Date de publication et mention de la délivrance du brevet: **14.08.1996**
(21) Numéro de dépôt: 93401074.5
(22) Date de dépôt: 26.04.1993
(51) Int. Cl.: G21C 15/18

(54) **Dispositif d'évacuation de la puissance résiduelle du coeur d'un réacteur nucléaire à eau pressurisée**
Einrichtung zur Nachwärmeabfuhr des Kerns eines Druckwasserkernreaktors
Arrangement for the core decay heat removal of a pressurized water nuclear reactor

(30) Priorité: 28.04.1992 FR 9205220
(43) Date de publication de la demande: 03.11.1993
(73) Titulaire: COMMISSARIAT A L'ENERGIE ATOMIQUE, 75015 Paris (FR)
(72) Inventeur: Gautier, Guy Marie, F-84120 Pertuis (FR)
(74) Mandataire: Dubois-Chabert, Guy

(56) Documents cités:
- BE-A- 666 103
- FR-A- 2 500 676
- GB-A- 1 026 474
- US-A- 4 767 594
- NUCLEAR TECHNOLOGY no. 2, Novembre 1991, LA GRANGE PARK, IL, USA, pages 229-235, CHARLES W. FORSBERG: "A water level-initiated decay energy cooling system"
- PATENT ABSTRACTS OF JAPAN vol. 14, no. 309 (P-1071)(4252) 4 Juillet 1990 & JP-A-02 098 691
- PATENT ABSTRACTS OF JAPAN vol. 13, no. 502 (P-958)(3850) 13 Novembre 1989 &b JP-A-01 202 694

## Description

La présente invention se rapporte d'une manière générale aux réacteurs nucléaires à eau pressurisée et elle concerne de manière plus précise le problème, connu de l'homme de métier, de la nécessité d'évacuer la puissance résiduelle du coeur en cas d'arrêt programmé ou accidentel du réacteur.

On rappellera d'abord ce qu'est la puissance résiduelle d'un réacteur. Lorsqu'on arrête un réacteur en introduisant une forte antiréactivité dans le coeur, le nombre de fissions dans ce dernier devient très rapidement négligeable au bout d'un temps de l'ordre de quelques secondes. En revanche, la radioactivité des produits de fission qui se sont développés dans le coeur pendant la période de fonctionnement normal du réacteur, continue à dégager une puissance importante qui peut représenter approximativement 7% de la puissance de fonctionnement au moment de l'arrêt du réacteur. Il est donc nécessaire, quelle que soit la cause de l'arrêt, surtout si elle intervient lors d'un accident de dépressurisation du circuit primaire, de disposer de moyens d'évacuation de cette puissance résiduelle du coeur sans laquelle l'échauffement pourrait amener des conditions catastrophiques allant par exemple jusqu'à la fusion du coeur.

De manière traditionnelle, trois moyens sont essentiellement utilisés à ce jour pour évacuer la puissance résiduelle sur les réacteurs à eau pressurisée. Ce sont le générateur de vapeur, le système de refroidissement du réacteur à l'arrêt (RRA), et le dispositif d'injection de sécurité (IS) pour les situations accidentelles.

Le générateur de vapeur dont c'est la fonction normale d'absorber des calories peut bien entendu continuer à jouer un rôle d'échange thermique avec l'eau primaire après l'arrêt du réacteur. Ce processus qui peut durer quelques heures devient inopérant lorsque la pression et la température baissent respectivement jusqu'à environ 30 bars et 180°C. En effet, les générateurs de vapeur et le circuit secondaire ne sont pas conçus pour l'évacuation des calories à basse température et à basse pression.

A partir de ce moment, c'est le système de refroidissement du réacteur à l'arrêt (RRA) qui prend le relai en injectant de l'eau froide dans le circuit primaire.

On parvient ainsi à porter le coeur en une quinzaine d'heures environ à une température inférieure à 100°C.

Le circuit d'injection de sécurité (IS) est destiné à assurer le refroidissement de secours du coeur et l'insertion rapide d'antiréactivité dans celui-ci, dans tous les cas où intervient une dépressurisation accidentelle du circuit primaire, pouvant même résulter de la rupture complète de ce circuit. Il réalise sa fonction en injectant le plus rapidement possible de l'eau de refroidissement boriquée dans le coeur du réacteur.

Ces différents dispositifs dont le fonctionnement est satisfaisant possèdent néanmoins un certain nombre de points faibles que l'on peut énumérer comme suit :

L'éloignement de la source d'eau froide par rapport au coeur peut toujours être une cause de fonctionnement imparfait de ces dispositifs ; en effet, plus il y a de matériels entre le coeur et la source froide, plus le risque de défaillance est important (rupture de tuyauterie, mauvais fonctionnement d'une vanne, d'un moteur, ...).

La conception du GV ne lui permet de fonctionner qu'à haute pression et haute température. A basse pression et basse température, le RRA prend la relève des GV pour évacuer la puissance résiduelle. Généralement la plage de recouvrement de fonctionnement des deux systèmes est étroite et nécessite une procédure particulière.

Lors d'interventions sur les GV, le niveau d'eau dans le circuit primaire se situe à mi-hauteur dans les tuyauteries chaudes et froides. Les piquages du circuit RRA sont situés légèrement dessous ce niveau. Des précautions particulières relatives au fonctionnement du RRA doivent être prises, afin d'éviter tout risque d'entraînement d'air et formation de vortex conduisant à la disparition de la fonction d'évacuation de puissance résiduelle.

Après un accident de perte de réfrigérant primaire, les GV et le RRA peuvent être totalement indisponibles, même à très long terme. Le seul moyen d'évacuer la puissance résiduelle est l'injection de sécurité IS qui est un système actif. Même dans cette hypothèse, une disparition éventuelle des sources électriques conduit à un arrêt de l'évacuation de puissance résiduelle.

Comme on le voit sur les quelques exemples ci-dessus, les systèmes actuels peuvent être défaillants et il en résulterait alors de graves conséquences sur le réacteur et son environnement.

Différentes solutions ont déjà été proposées pour améliorer la sécurité du dispositif d'évacuation de puissance résiduelle d'un réacteur nucléaire. Pratiquement toutes les solutions proposées consistent à introduire un échangeur de chaleur auxiliaire dans la cuve même du réacteur.

On peut citer à ce sujet le document FR-A-2500676 du CEA où l'on préconise l'introduction d'un échangeur dans la cuve du réacteur pour extraire la chaleur du caloporteur sans passer par les boucles. Mais pour qu'un tel système soit efficace, il faut que le caloporteur puisse circuler entre le coeur et l'échangeur. Cet aménagement interne à la cuve n'est pas décrit et de plus le dessin de cuve proposé est totalement différent des cuves actuellement utilisées.

D'autres documents comme l'article "A water level initiated decay energy cooling system" de Charles W. FORSBERG de l'Oak Ridge National Laboratory, paru pages 229 et suivantes de la revue Nuclear Technology, vol. 96, Novembre 1991, présentent également des réacteurs à eau avec des échangeurs intégrés destinés à l'évacuation de puissance résiduelle. Ce sont des systèmes astucieux "d'interrupteur thermique" commandant l'échange de chaleur entre le circuit primaire et cet échangeur. Toutefois, ces systèmes sont encombrants, ne sont pas compatibles avec les réacteurs à eau pressurisée actuels, et sont plutôt destinés à d'autres filières de réacteurs.

La présente invention a précisément pour objet un dispositif d'évacuation de la puissance résiduelle du coeur d'un réacteur qui permet en utilisant comme dans le dispositif de l'art antérieur un échangeur auxiliaire interne à la cuve, de résoudre les problèmes précédents dans tous les cas où la cuve reste remplie d'eau primaire.

Ce dispositif d'évacuation de la puissance résiduelle du coeur d'un réacteur nucléaire à eau pressurisée, comprenant une circulation d'eau primaire selon un trajet en épingle à cheveux dans la cuve du réacteur comprenant à cet effet deux viroles concentriques définissant un compartiment annulaire externe dans lequel l'eau primaire froide décrit un trajet descendant et un compartiment cylindrique central, contenant le coeur proprement dit, dans lequel l'eau primaire s'écoule de bas en haut en s'échauffant au travers du coeur, se caractérise en ce qu'il comporte :
- une troisième virole définissant un espace annulaire complémentaire entre les deux compartiments précédents, cet espace annulaire étant mis en communication à sa base, par un premier orifice débouchant dans la partie inférieure du compartiment annulaire externe, avec l'eau froide du circuit primaire et à sa partie supérieure, par un second orifice, débouchant dans la partie supérieure du compartiment central, avec l'eau chaude du circuit primaire ;
- un échangeur de chaleur auxiliaire, situé dans cet espace annulaire complémentaire, cet échangeur auxiliaire étant alimenté, de façon autonome, par un deuxième fluide caloporteur indépendant de l'eau primaire de refroidissement du coeur du réacteur.

La présence d'une troisième virole et d'un espace annulaire complémentaire entre le coeur et la périphérie de la cuve permet ainsi de créer une zone dans laquelle une circulation d'eau primaire a lieu de toute façon soit par effet de dépression lorsque le circuit primaire est toujours en fonctionnement, soit par effet de thermo-siphon si cette dernière circulation est interrompue. L'échangeur de chaleur auxiliaire situé dans l'espace annulaire complémentaire ainsi créé étant alimenté indépendamment de ce circuit primaire par un deuxième fluide caloporteur pouvant déboucher à l'extérieur du réacteur sur toute source froide connue telle que condenseur, aéroréfrigérant etc, le dispositif selon l'invention permet ainsi en toutes circonstances une bonne évacuation de la puissance résiduelle du coeur même après l'arrêt du réacteur.

Selon une caractéristique importante de la présente invention, un mode de mise en oeuvre du dispositif d'évacuation comprend, après fermeture du premier orifice précédent, des moyens pour augmenter l'effet de dépression au voisinage de la base de l'espace annulaire complémentaire. La mise en oeuvre de ces moyens est en effet parfois nécessaire lorsque la perte de charge du liquide primaire à travers le coeur devient trop importante et compromettrait la circulation de ce fluide primaire dans l'espace annulaire complémentaire où se trouve précisément l'échangeur de chaleur auxiliaire.

Deux modes de mise en oeuvre spécialement intéressants sont envisagés dans le cadre de la présente invention pour réaliser ces moyens d'augmentation de l'effet de dépression.

Dans un premier mode de mise en oeuvre, lesdits moyens pour augmenter l'effet de dépression comportent des moyens de fermeture du premier orifice et une série de conduits cylindriques radiaux, s'étendant, au voisinage de la base du coeur, dans le compartiment annulaire externe, lesdits conduits cylindriques radiaux débouchant sur des ouvertures prévues à cet effet de place en place sur la périphérie de la partie basse de la virole intermédiaire dans l'espace annulaire complémentaire et étant munis sur leur paroi de fentes longitudinales de communication avec le compartiment annulaire externe.

Dans ce premier mode de mise en oeuvre particulier, c'est l'écoulement de l'eau primaire autour des fentes longitudinales des conduits cylindriques qui crée un effet de dépression plus important que ne pouvait le faire le simple premier orifice du dispositif général. A cet effet d'ailleurs, les meilleurs résultats sont obtenus lorsque les fentes longitudinales de commumnication avec le compartiment annulaire externe sont au nombre de deux sur chaque conduit, et que leur position azimutale sur la surface des conduits cylindriques fait un angle φ voisin de 80° dans la direction principale de l'écoulement descendant dans le compartiment annulaire externe.

Dans le deuxième mode de mise en oeuvre des moyens pour augmenter l'effet de dépression, le dispositif comporte dans le compartiment annulaire externe au-dessous de l'échangeur de chaleur auxiliaire, une chambre annulaire en communication par une série d'ouvertures avec l'espace annulaire complémentaire et, par une fente également annulaire, avec le compartiment annulaire externe, ladite chambre annulaire ayant une extension dans le sens radial de la cuve telle, qu'elle crée, dans le compartiment annulaire externe, un rétrécissement de nature à provoquer une augmentation, à l'endroit de la fente précédente, de la vitesse d'écoulement du fluide primaire descendant dans ce compartiment annulaire externe de l'échangeur de chaleur auxiliaire.

Dans ce mode de mise en oeuvre, le principe physique appliqué s'apparente au précédent dans la mesure où l'augmentation de l'effet de dépression est obtenu simultanément par la situation de la fente dans une zone où l'écoulement du fluide provoque une dépression, et par une restriction du canal offert dans le compartiment annulaire externe à la circulation de l'eau primaire.

De toute façon l'invention sera mieux comprise en se référant à la description qui suit de plusieurs exemples de mise en oeuvre qui seront décrits à titre illustratif et non limitatif en se référant aux figures 1 à 4 ci-jointes sur lesquelles :
- la figure 1 représente en coupe selon l'axe une vue schématique d'un réacteur nucléaire du type à eau pressurisée muni du dispositif objet de l'invention ;
- la figure 2 représente une vue en coupe de ce même réacteur dans le cas d'utilisation du premier mode de mise en oeuvre des moyens pour augmenter l'effet de dépression ;
- la figure 3 représente, vu en perspective semi éclaté et après enlèvement de la cuve externe du réacteur, le dispositif de la figure 2 ;
- la figure 4 représente en coupe selon l'axe une vue schématique des seconds moyens mis en oeuvre pour augmenter l'effet de dépression.

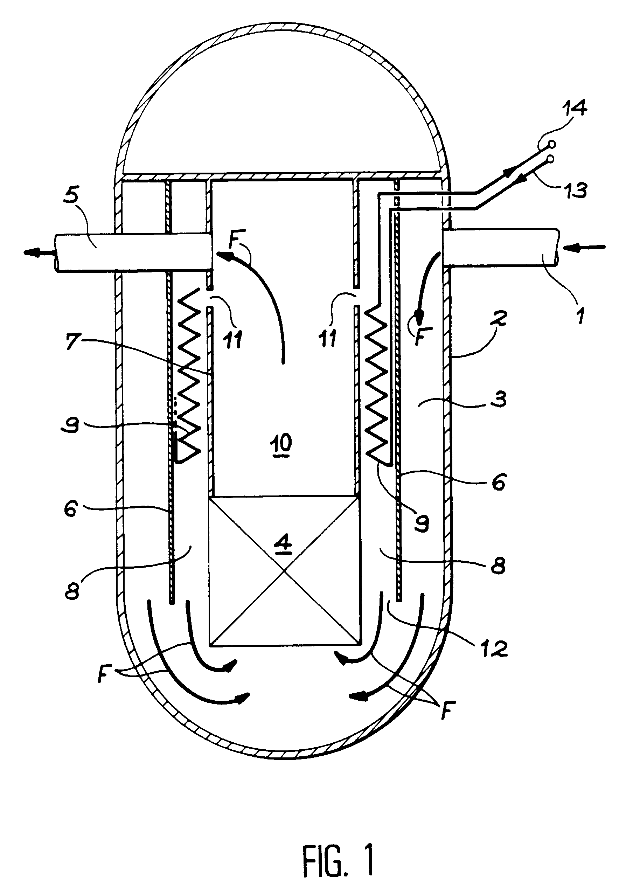

Sur la figure 1, on a représenté en coupe élévation et de façon schématique la cuve d'un réacteur nucléaire du type à eau ordinaire pressurisée.

Dans ce réacteur, qui est muni du dispositif d'évacuation de la puissance résiduelle, objet de l'invention, on retrouve bien entendu les composants fondamentaux de ce type d'installation, à savoir plusieurs entrées 1 amenant l'eau froide en haut de la cuve 2, cette eau s'écoulant selon le trajet indiqué par les flèches F sur le dessin, de façon d'abord descendante dans un compartiment annulaire externe 3 puis selon un trajet en épingle à cheveux, de façon ascendante ensuite au travers du coeur 4 où elles s'échauffent en prélevant les calories qui seront utilisées dans le générateur de vapeur non représenté. A cet effet l'eau chaude sort de la cuve par une ou plusieurs tuyauteries 5, après avoir traversé le compartiment annulaire externe 3 à l'aide de dispositifs d'un type connu qui n'importent pas particulièrement à la présente invention. Le système de circulation qui vient d'être décrit est relatif bien entendu à ce que l'on appelle le circuit d'eau primaire qui alimente ensuite le générateur de vapeur non représenté sur la figure, la vapeur produite servant à mettre en fonctionnement des turbines puis un ou des alternateurs.

Pour réaliser l'évacuation de la puissance résiduelle produite par le coeur 4, après un arrêt de la réaction en chaîne, le dispositif, objet de l'invention comporte essentiellement une virole supplémentaire ou troisième virole 7 qui définit avec la virole interne 6 du compartiment externe 3, un espace annulaire complémentaire 8. Conformément à l'invention, cet espace annulaire 8 comporte un ou plusieurs échangeurs de chaleur 9 alimentés de façon autonome par un second fluide caloporteur qui entre en 13 et ressort en 14. Ce fluide caloporteur secondaire permet d'évacuer en dehors de la cuve la puissance voulue et il échange à son tour ses calories avec une source froide de nature quelconque connue par exemple un aéroréfrigérant, un condenseur etc. Ce caloporteur secondaire peut être quelconque et selon les cas monophasique ou diphasique. Dans le cas d'un réacteur à eau, un bon choix peut consister à utiliser comme fluide secondaire de l'eau ordinaire.

Pour qu'un tel dispositif soit efficace, il faut que l'eau circule de façon continue dans la cuve du réacteur entre le coeur et l'échangeur, et que cette circulation perturbe le moins possible le fonctionnement normal du réacteur. L'invention présentée ici décrit l'aménagement interne de la cuve pour parvenir à cette circulation.

Il est nécessaire que l'eau chaude du coeur puisse circuler le long de l'échangeur 9. A cet effet, deux moyens sont mis en oeuvre. Le premier moyen est un premier orifice 12 situé dans la partie inférieure de l'espace annulaire complémentaire 8 qui met ce dernier en communication avec la partie descendante de l'eau froide réfrigérante avant son entrée dans le coeur ; le second moyen est un second orifice 11 situé dans la troisième virole 7 au-dessus des échangeurs 9 et en-dessous du niveau des tubulures d'entrée 1 et de sortie 5 de l'eau primaire. Cet orifice 11 est d'ailleurs le plus souvent multiple et comporte un certain nombre de trous répartis sur la périphérie de la troisième virole 7. De cette manière, l'espace annulaire complémentaire 8 communique avec l'espace situé au-dessus du coeur 4 et couramment appelé "plenum supérieur".

La circulation d'eau chaude à refroidir dans l'espace annulaire complémentaire 8 le long des échangeurs 9 a lieu sous l'effet de deux processus différents qui peuvent selon les cas agir simultanément ou au contraire séparément selon que l'eau primaire circule ou non dans le réacteur.

Si en effet, cette eau primaire circule, son débit est suffisant pour créer au niveau du premier orifice 12 une dépression dans l'espace complémentaire 8 qui aspire l'eau chaude dans cet espace à partir du plenum supérieur 10 au travers des orifices 11.

Si au contraire la circulation d'eau primaire est arrêtée, le système est dimensionné et conçu de façon telle que la chaleur résiduelle dégagée par le coeur est suffisante pour produire un effet de thermosyphon qui fait circuler l'eau chaude selon un trajet descendant dans l'espace annulaire complémentaire 8.

Comme déjà indiqué, le caloporteur froid entre par la conduite 1, descend l'espace annulaire 3 et remonte dans le coeur 4 où il s'échauffe et perd de la pression avant de ressortir de la cuve en 5. En partie inférieure de l'espace annulaire 3, une dépression est créée dans l'espace annulaire 8. Cette dépression étant supérieure à la perte de pression dans le coeur 4, le fluide dans 8 se trouve alors aspiré par le fluide venant de 3. Le caloporteur est donc descendant dans l'espace annulaire 8. Lorsque le fluide provenant de la boucle 1 n'est plus disponible (par exemple lors d'une brèche ou d'un arrêt des pompes non représentées sur la figure), une circulation naturelle s'établit entre le coeur et les échangeurs 9 via les orifices 11 et 12. L'intérêt de cette disposition des composants dans la cuve est que le fluide traversant l'espace 8 est mu par deux forces complémentaires, l'une est la convection forcée due à la circulation principale provenant de la branche 1, l'autre est la convection naturelle. L'une ou l'autre des deux forces est nécessaire. Il n'y a pas d'inversion de sens de l'écoulement lors du passage de l'une à l'autre force, ou lors de la disparition de l'une d'entre elles. De ce fait, ce dispositif permet d'extraire de la puissance du réacteur quel que soit le niveau de pression et de température du caloporteur primaire et quel que soit l'état des boucles.

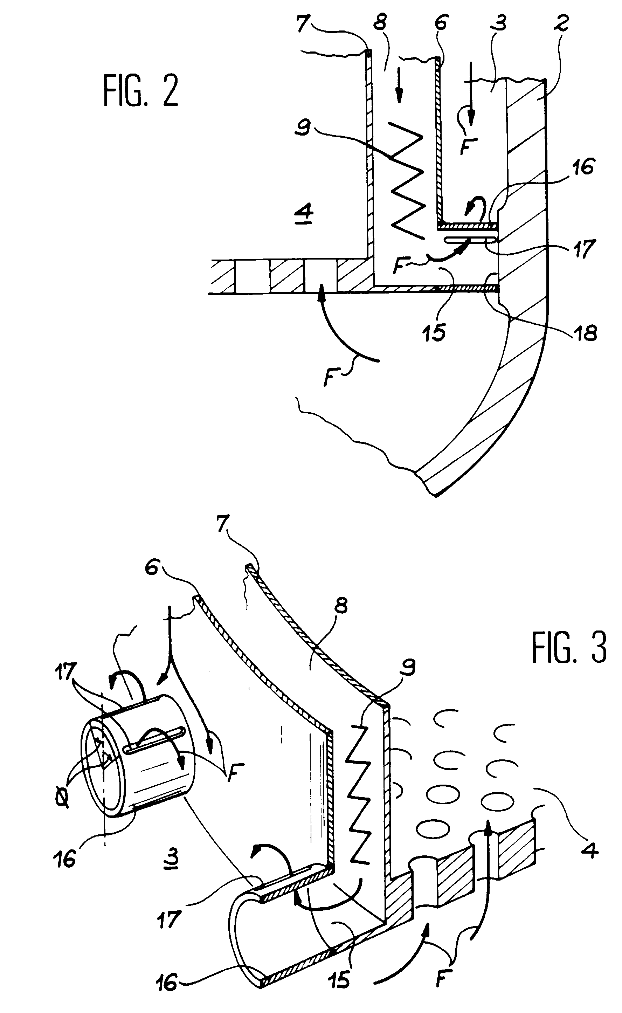

On peut remarquer que si les pertes de charge du coeur 4 devaient être trop importantes, un dispositif complémentaire pour améliorer l'effet de dépression devrait être installé au niveau de la communication 12. A titre d'exemple, de tels dispositifs sont représentés sur les figures 2 et 3.

Sur la figure 2, qui représente le premier mode de mise en oeuvre des moyens pour augmenter la dépression, on a fermé l'ouverture située en 12 pour la remplacer par une série de petites ouvertures 15 situées radialement sur la virole 6. Ces ouvertures 15 communiquent, à travers une série de conduits radiaux 16 de forme cylindrique ou presque traversant radialement l'espace annulaire 3, avec le compartiment externe 3. Sur chaque conduit sont disposées deux fentes longitudinales 17 servant de communication avec l'espace annulaire 3. La position azimutale de ces fentes forme un angle φ voisin de 80° avec la direction principale de l'écoulement descendant dans l'espace annulaire 3 pour créer ainsi un effet de dépression plus important. L'effet d'aspiration étant également lié à la vitesse du fluide descendant dans l'espace annulaire 3, un rétrécissement local 18 de cet espace au droit des fentes permet, si besoin est, d'améliorer l'effet de dépression.

Sur la figure 3 sont représentés, après enlèvement de la cuve 2 deux conduits radiaux 16, vus en perspective, avec arrachement pour l'un d'eux, sur la virole 6 du compartiment annulaire externe. La flèche F montre le trajet de rentrée dans le coeur 4 de l'eau provenant de l'espace annulaire complémentaire 8 au travers des conduits radiaux 16 et des fentes 17.

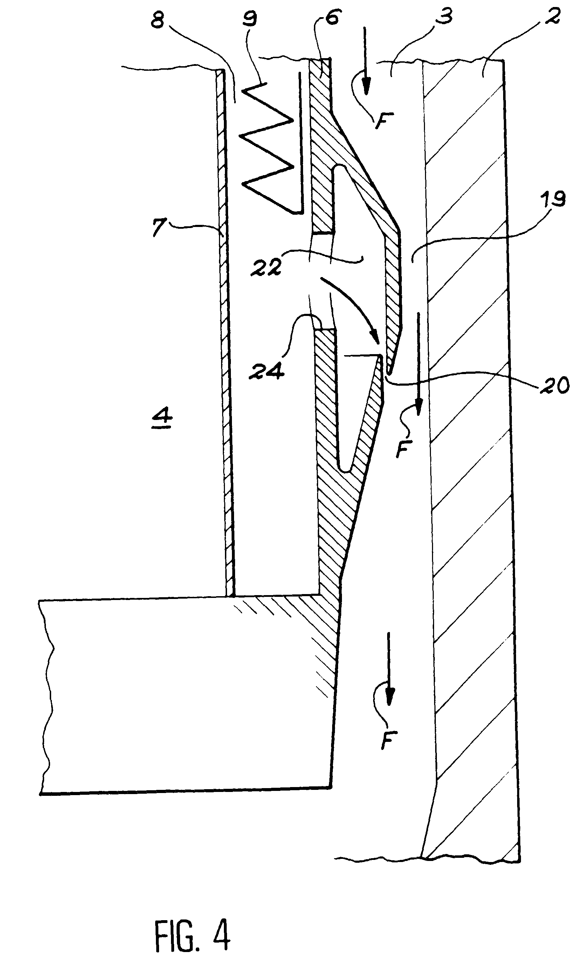

Sur la figure 4, on décrit le second mode de mise en oeuvre des moyens pour augmenter la dépression dans l'espace annulaire 8. Sur la partie courante de la virole 6 ou de la cuve 2, et sous la partie inférieure de l'échangeur 9, un rétrécissement 19 est créé pour permettre un accroissement de la vitesse du fluide descendant l'espace 3. Vers l'endroit où la vitesse est la plus importante, une fente 20 créée dans une chambre annulaire 22 et faisant le tour de la virole 6 permet la communication entre l'espace annulaire 8 et l'espace annulaire 3. Bien entendu, la communication 12 est bouchée. La chambre annulaire 22 communique, par des orifices 24, avec l'espace annulaire complémentaire 8.

La commmunication 11 entre l'espace annulaire 8 et le plénum supérieur 10 peut être une série de simples trous. Une option éventuelle pour améliorer le système en créant une surpression est que ces communications soient constituées de tuyaux courts dont un côté est fixé sur les trous précédents, et l'autre extrémité est du côté du plénum supérieur 10 avec l'orifice tourné face à la direction principale de l'écoulement dans le plénum 10.

Afin que la convection naturelle soit favorisée, l'échangeur 9 est placé le plus haut possible par rapport au coeur 4. La communication 11 doit être au-dessus de l'échangeur 9, mais en-dessous des tuyauteries 1 et 5, car ce sont elles qui déterminent le niveau d'eau minimum dans la cuve.

## Revendications

1. Dispositif d'évacuation de la puissance résiduelle du coeur d'un réacteur nucléaire à eau pressurisée, comprenant une circulation d'eau primaire selon un trajet en épingle à cheveux dans la cuve (2) du réacteur comprenant à cet effet deux viroles concentriques (2,6) définissant un compartiment annulaire externe (3) dans lequel l'eau primaire froide décrit un trajet descendant et un compartiment cylindrique central (10), contenant le coeur (4) proprement dit, dans lequel l'eau primaire s'écoule de bas en haut en s'échauffant au travers du coeur, caractérisé en ce qu'il comporte :
- une troisième virole (7) définissant un espace annulaire complémentaire (8) entre les deux compartiments précédents (3,10), cet espace annulaire (8) étant mis en communication à sa base, par un premier orifice (12) débouchant dans la partie inférieure du compartiment annulaire externe (3), avec l'eau froide du circuit primaire et à sa partie supérieure, par un second orifice (11), débouchant dans la partie supérieure du compartiment central (10), avec l'eau chaude du circuit primaire ;
- un échangeur de chaleur auxiliaire (9), situé dans cet espace annulaire complémentaire (8), cet échangeur auxiliaire (9) étant alimenté, de façon autonome, par un deuxième fluide caloporteur indépendant de l'eau primaire de refroidissement du coeur du réacteur.

2. Dispositif d'évacuation de la puissance résiduelle du coeur d'un réacteur nucléaire à eau pressurisée selon la revendication 1, caractérisé en ce qu'il comprend en outre des moyens pour augmenter l'effet de dépression au voisinage de la base de l'espace annulaire complémentaire.

3. Dispositif d'évacuation de la puissance résiduelle selon la revendication 2, caractérisé en ce que lesdits moyens pour augmenter l'effet de dépression comportent des moyens de fermeture du premier orifice et une série de conduits cylindriques radiaux (16), s'étendant, au voisinage de la base du coeur, dans le compartiment annulaire externe (3), lesdits conduits cylindriques radiaux (16) débouchant sur des ouvertures (15) prévues à cet effet de place en place sur la périphérie de la partie basse de la virole intermédiaire (6) dans l'espace annulaire complémentaire (8) et étant munis sur leur paroi de fentes longitudinales (17) de communication avec le compartiment annulaire externe (3).

4. Dispositif d'évacuation de la puissance résiduelle selon la revendication 3, caractérisé en ce que les fentes longitudinales de communication (17) avec le compartiment annulaire externe (3) sont au nombre de deux sur chaque conduit (16) et en ce que leur position azimutale sur la surface des conduits cylindriques fait un angle φ voisin de 80° avec la direction principale de l'écoulement descendant dans le compartiment annulaire externe (3).

5. Dispositif d'évacuation de la puissance résiduelle selon la revendication 2, caractérisé en ce que lesdits moyens pour augmenter l'effet de dépression comportent des moyens de fermeture du premier orifice et, dans le compartiment annulaire externe (3), au-dessous de l'échangeur de chaleur auxiliaire (9), une chambre annulaire (22) en communication par une série d'ouvertures (24) avec l'espace annulaire complémentaire (8) et, par une fente (20) également annulaire, avec le compartiment annulaire externe (3), ladite chambre annulaire (22) ayant une extension dans le sens radial de la cuve (2) telle, qu'elle crée, dans le compartiment annulaire externe (3), un rétrécissement (19) de nature à provoquer une augmentation, à l'endroit de la fente (20) précédente, de la vitesse d'écoulement du fluide primaire descendant dans ce compartiment annulaire externe (3) de l'échangeur de chaleur auxiliaire (9).

## Patentansprüche

1. Vorrichtung zur Abfuhr der Nachwärmeleistung des Kerns eines Druckwasserkernreaktors, umfassend einen ersten Druckwasserkreislauf, einer haarnadelförmigen Strecke bzw. Bahn in dem in dem Behälter (2) des Reaktors entsprechend, der zu diesem Zweck zwei konzentrische Mäntel (2, 6) umfaßt, die ein äußeres ringförmiges Abteil (3) definieren, in dem das kalte Primärwasser eine abwärtsgerichtete Bahn beschreibt, und ein zentrales zylindrisches Abteil (10), den eigentlichen Kern (4) enthaltend, in dem das Primärwasser von unten nach oben fließt und sich dabei durch den Kern erwärmt,
**dadurch gekennzeichnet,** daß es umfaßt:
- einen dritten Mantel (7), der einen zusätzlichen ringförmigen Raum (8) zwischen den beiden vorhergehenden Abteilen (3, 10) definiert, wobei dieser ringförmige Raum (8) an seiner Basis durch eine erste Öffnung (12), die im unteren Teil des äußeren ringförmigen Abteils (3) mündet, verbunden ist mit dem Kaltwasser des Primärkreises und in seinem oberen Teil durch eine zweite Öffnung (11), die in dem oberen Teil des zentralen Abteils (10) mündet, mit dem Warmwasser des Primärkreises;
- einen Hilfswärmetauscher (9), in diesem zusätzlichen ringförmigen Raum (8) befindlich, wobei dieser Hilfswärmetauscher (9) auf autonome Weise gespeist wird durch ein zweites, vom Primärkühlwasser des Reaktorkerns unabhängiges Wärmeübertragungsfluid.

2. Vorrichtung zur Abfuhr der Nachwärmeleistung des Kerns eines Druckwasserkernreaktors nach Anspruch 1, dadurch gekennzeichnet, daß sie außerdem Einrichtungen umfaßt, um die Unterdruckwirkung in der Umgebung der Basis des zusätzlichen ringförmigen Raums zu erhöhen.

3. Vorrichtung zur Abfuhr der Nachwärmeleistung des Kerns eines Druckwasserkernreaktors nach Anspruch 2, dadurch gekennzeichnet, daß die genannten Einrichtungen zum Erhöhen der Unterdruckwirkung Verschlußeinrichtungen der ersten Öffnung umfassen und eine Reihe von radialen zylindrischen Leitungen (16), die sich in der Umgebung der Basis des Kerns erstrecken, in dem äußeren ringförmigen Abteil (3), wobei besagte radiale zylindrische Leitungen (16) in Öffnungen (15) münden, zu diesem Zweck in dem zusätzlichen ringförmigen Raum (8) stellenweise auf dem Umfang des unteren Teils des Zwischenmantels (6) vorgesehen und in ihrer Wand mit Längsschlitzen (17) versehen, zur Verbindung mit dem äußeren ringförmigen Abteil (3).

4. Vorrichtung zur Abfuhr der Nachwärmeleistung des Kerns eines Druckwasserkernreaktors nach Anspruch 3, dadurch gekennzeichnet, daß die Längsschlitze (17) zur Verbindung mit dem äußeren ringförmigen Abteil (3) in jeder Leitung (16) zwei an der Zahl sind, und daß ihre azimutale Stellung auf der Oberfläche der zylindrischen Leitungen einen Winkel φ von ungefähr 80° mit der Hauptrichtung des Abwärtsstroms in dem äußeren ringförmigen Abteil (3) bildet.

5. Vorrichtung zur Abfuhr der Nachwärmeleistung des Kerns eines Druckwasserkernreaktors nach Anspruch 2, dadurch gekennzeichnet, daß die genannten Einrichtungen zum Erhöhen der Unterdruckwirkung Verschlußeinrichtungen der ersten Öffnung umfassen und, in dem äußeren ringförmigen Abteil (3), unter dem Hilfswärmetauscher (9), eine ringförmige Kammer (22), die über eine Reihe Öffnungen (24) mit dem zusätzlichen ringförmigen Raum (8) verbunden ist und durch einen Schlitz (20), ebenfalls ringförmig, mit dem äußeren ringförmigen Abteil (3), wobei besagte ringförmige Kammer (22) in radialer Richtung des Behälters (2) eine Erweiterung aufweist, die in der äußeren ringförmigen Kammer (3) eine Verengung (19) schafft, die in Höhe des vorhergehenden Schlitzes (20) eine Erhöhung der Strömungsgeschwindigkeit des in diesem äußeren ringförmigen Abteil (3) des Hilfswärmetauschers (9) abwärtsfließenden Primärfliuds verursacht.

## Claims

1. Apparatus for removing the residual power from the core of a pressurized water nuclear reactor, having a primary water circulation in accordance with a hairpin path in the reactor vessel (2) and for this purpose having two concentric ferrules (2,6) defining an external annular compartment (3), in which the cold primary water describes a downward path and a central cylindrical compartment (10) containing the actual core (4), in which the primary water flows from bottom to top, accompanied by heating, through the core, characterized in that it comprises a third ferrule (7) defining a complementary annular space (8) between the two preceding compartments (3,10), said annular space (8) being linked in its lower part by a first orifice (12) issuing into the external annular compartment (3) with the cold water of the primary circuit and in its upper part and by a second orifice (11) issuing into the central compartment (10) with the hot water of the primary circuit and an auxiliary heat exchanger (9) located in said complementary annular space (8), said auxiliary exchanger (9) being supplied autonomously by a second heat transfer fluid, which is independent of the primary cooling water of the reactor core.

2. Apparatus for removing the residual power from the core of a pressurized water nuclear reactor according to claim 1, characterized in that it also comprises means for increasing the vacuum effect in the vicinity of the base of the complementary annular space.

3. Apparatus for removing the residual power according to claim 2, characterized in that said means for increasing the vacuum effect incorporate means for closing the first orifice and a series of cylindrical radial pipes (16) extending, in the vicinity of the base of the core, into the external annular compartment (3), said cylindrical radial pipes (16) issuing onto openings (15) provided at this purpose every so often on the periphery of the lower part of the intermediate ferrule (6) in the complementary annular space (8) and being provided on their wall with longitudinal slots (17) for communication with the external annular compartment (3).

4. Apparatus for removing residual power according to claim 3, characterized in that there are two such longitudinal communicating slots (17) with the external annular compartment (3) on each pipe (16) and in that their azimuth position on the surface of the cylindrical pipes forms an angle φ close to 80° with the main downward flow direction in the external annular compartment (3).

5. Apparatus for removing residual power according to claim 2, characterized in that the means for increasing the vacuum effect incorporate means for closing the first orifice and, in the external annular compartment (3) below the auxiliary heat exchanger (9), an annular chamber (22) linked by a series of openings (24) with the complementary annular space (8) and, by an annular slot (20), with the external annular compartment (3), said annular chamber (22) having an extension in the radial direction of the vessel (2) such that it creates, in the external annular compartment (3), a narrowing (19) which leads to an increase, at the location of the slot (20), to the flow rate of the primary fluid descending into the external annular compartment (3) of the auxiliary heat exchanger (9).
